# FASCICULE DE BREVET EUROPEEN

(11) **EP 2 873 045 B1**
(45) Date de publication et mention de la délivrance du brevet: **24.01.2024**
(21) Numéro de dépôt: 13744720.7
(22) Date de dépôt: 09.07.2013
(51) Int. Cl.: G06Q 20/32

(54) **ENTITE ELECTRONIQUE SECURISEE POUR L'AUTORISATION D'UNE TRANSACTION**
SICHERE ELEKTRONISCHE ENTITÄT ZUR AUTORISIERUNG EINER TRANSAKTION
SECURE ELECTRONIC ENTITY FOR AUTHORIZING A TRANSACTION

(30) Priorité: 13.07.2012 FR 1256779
(43) Date de publication de la demande: 20.05.2015
(73) Titulaire: IDEMIA France, 92400 Courbevoie (FR)
(72) Inventeur: AUBIN, Yann-Loïc, F-92700 Colombes (FR); DUCROS, Christophe, F-92700 Colombes (FR); DESPIERRE, Thierry, F-92700 Colombes (FR); GAUVIN, David, F-92700 Colombes (FR); RICO, Ruben, F-92700 Colombes (FR)
(74) Mandataire: Idemia
(86) Numéro de dépôt international: PCT/FR2013/051630
(87) Numéro de publication internationale: WO 2014/009646

(56) Documents cités:
- EP-A1- 2 053 553
- EP-A1- 2 053 554
- EP-A1- 2 075 751
- WO-A2-2008/063990
- WO-A2-2010/128442
- US-A1- 2011 231 319

## Description

### Domaine technique et art antérieur

L'invention s'inscrit dans le domaine du paiement à distance, et plus précisément le paiement à un terminal de paiement à l'aide d'une entité électronique portable.

Il est connu de payer à l'aide d'une carte à microcircuit (carte bancaire à puce) et d'un terminal de paiement de commerçant, relié à un réseau de communication sécurisé par lequel il communique avec les organismes du système de paiement EMV (*Europay Mastercard Visa*).

La communication entre la carte à microcircuit et le terminal de paiement peut se faire avec ou sans contacts, notamment en utilisant la technologie NFC (*Near-Field Communication).*

Le terminal de paiement contient quant à lui l'application permettant de vérifier les transactions envisagées, compte tenu de règles établies pour le commerçant et la carte de paiement. Il demande, si besoin est, une autorisation à un serveur distant.

Le terminal de paiement effectuant ces opérations est sécurisé, et son détenteur ne peut pas y ajouter de nouvelles applications.

Ainsi, un téléphone portable, ou une tablette graphique ne peuvent pas, sans développements particuliers, être utilisés comme terminal de paiement.

Le document WO 2008/063990 décrit un système pour paiement à un point de vente non nécessairement relié à un réseau. L'acheteur utilise son téléphone portable pour se connecter à un centre de paiement par le réseau de téléphonie mobile. Il transmet au centre de paiement un identifiant du point de vente. La communication entre le point de vente et le téléphone portable se fait par un moyen de communication à courte portée, ou une communication audio. Le niveau de sécurité est faible.

Le document WO 2010/128442 décrit un terminal de paiement incorporé dans une zone sécurisée d'une carte mémoire, telle une carte à mémoire flash, à insérer dans un téléphone portable. La carte comporte une deuxième zone sécurisée qui incorpore une ou plusieurs cartes de paiement émises par une ou plusieurs banques pour le porteur du téléphone. Le terminal de paiement est identifié comme appartenant à une banque ou une institution qui le loue au commerçant. Il ne fonctionne qu'avec un dispositif initiateur dont doit être équipé le commerçant. La solution est peu sécurisée, car elle implique un terminal de paiement présent dans le téléphone de l'acheteur.

Le document EP2 053 553 A1 décrit un procédé permettant à un débiteur disposant d'un téléphone mobile de transmettre un montant à un créditeur qui dispose également d'un téléphone mobile, la connexion entre les deux téléphones mobiles étant de type NFC.

Le document EP 2 075 751 A1 décrit un système comprenant un terminal client apte à communiquer localement avec un terminal relais, le terminal relais étant connecté à un serveur d'application via un réseau de radiotéléphonie.

Pour offrir une solution surmontant les inconvénients ainsi évoqués, on souhaite mettre en place une solution de paiement sécurisée fonctionnant avec les téléphones portables compatibles existants, et ne nécessitant pas que le commerçant s'équipe de nouveaux équipements.

### Objet de l'invention et avantages apportés par celle-ci

Pour cela, il est proposé un système comprenant un serveur de vérification de transaction distant, un dispositif électronique portable, et une entité électronique sécurisée comportant une interface de communication,
l'entité électronique sécurisée étant une entité électronique sécurisée du dispositif électronique portable constituée par une carte SIM ou un module sécurisé embarqué,
le dispositif électronique portable et le serveur distant disposant de moyens de connexion à un réseau de télécommunications,
l'entité électronique sécurisée comprenant une application qui, quand l'entité électronique sécurisée est connectée par ladite interface de communication au dispositif électronique portable, comporte :
   - des moyens pour s'authentifier auprès dudit serveur distant,
   - des moyens pour recevoir, d'une application de paiement dudit dispositif électronique portable et via ladite interface de communication, des données relatives à une transaction envisagée avec un dispositif tiers, la communication entre l'application de paiement et l'application de l'entité sécurisée étant sécurisée à l'aide d'un mécanisme d'accès sécurisé de type Access Control, et,
   - des moyens pour transmettre lesdites données via une connexion sécurisée au serveur distant, pour qu'il les analyse en vue de prendre une décision quant à une éventuelle autorisation de la transaction,
**le système étant caractérisé en ce que** l'application de l'entité électronique sécurisée comprend en outre :
   - des moyens pour authentifier ledit serveur de vérification de transaction distant, et
   - des moyens pour établir ladite connexion sécurisée, via le réseau de télécommunications, entre ladite application de l'entité électronique sécurisée et ledit serveur distant, avec des commandes et des acquittements APDU échangés entre l'entité électronique sécurisée et le dispositif électronique portable pour activer le système BIP,
**et en ce** que le dispositif électronique portable comprend également des moyens pour établir ladite connexion sécurisée avec des commandes UDP ou TCP/IP transmises à destination dudit serveur distant.

Grâce à cette entité électronique sécurisée et ce serveur de vérification de transaction, une transaction avec paiement à distance peut être effectuée dans des conditions sécurisées. Notamment, les clients de l'utilisateur de l'entité électronique sécurisée peuvent engager une transaction avec celui-ci avec un haut niveau de confiance, car ils savent que leurs données de paiement ne seront pas interceptées par un tiers non autorisé. De plus, le gestionnaire du serveur de vérification peut autoriser la vérification et la validation des transactions envisagées au sujet desquelles il reçoit des informations par la connexion sécurisée, car il sait que seul la personne disposant de l'entité électronique sécurisée a pu émettre les informations.

Dans un mode de réalisation particulier, l'application (110) de l'entité électronique sécurisée, pour s'authentifier auprès dudit serveur distant, comprend des moyens pour transmettre, via ladite interface de communication, un paramètre d'identification à un service de paiement, par exemple un numéro d'abonné à un service de paiement, encrypté avec une clé privée de l'entité électronique sécurisée.

Selon un mode particulier de mise en oeuvre, l'entité électronique sécurisée est configurée pour que connexion sécurisée soit une connexion de type SMS (*Short Message Service*), CAT-TP (*Card Application Toolkit* - *Transport Protocol*) ou http (*Hypertext Transfer Protocol*).

De manière avantageuse, l'interface de communication peut être adaptée pour la communication entre l'entité électronique sécurisée et une interface de communication à courte portée du dispositif électronique portable. Par exemple, cette interface de communication peut être de type SWP (*Single Wire Protocol*).

Également de manière avantageuse, l'entité électronique sécurisée comprend des moyens pour prendre en compte une information reçue du dispositif électronique portable indiquant que l'entité électronique sécurisée n'a pas pu être authentifiée par le serveur distant.

Selon un mode particulier de mise en oeuvre, l'entité électronique sécurisée peut comporter de plus des moyens pour fournir, audit dispositif électronique portable, un élément mémorisé lors d'une précédente utilisation, pour permettre à l'utilisateur du dispositif électronique portable de vérifier qu'il utilise une application du dispositif électronique portable qu'il a déjà utilisé auparavant.

Selon un mode particulier de mise en oeuvre, l'entité électronique sécurisée comporte de plus des moyens pour vérifier l'identité d'un utilisateur du dispositif électronique portable.

Selon un mode particulier de mise en oeuvre, le serveur de vérification de transaction comporte des moyens pour :
- s'authentifier auprès de l'entité électronique sécurisée,
- authentifier l'application de ladite entité électronique sécurisée,
- établir une connexion sécurisée, via ledit réseau, entre ledit serveur et l'application de ladite entité électronique sécurisée,
- recevoir, via la connexion sécurisée, des données d'une transaction envisagée, et,
- traiter ces données pour prendre une décision quant à une éventuelle autorisation de la transaction.

Selon un mode particulier de mise en oeuvre, le serveur, pour authentifier l'entité électronique sécurisée, comprend :
- des moyens pour recevoir, du dispositif électronique distant et par ledit réseau, une signature cryptée, et
- des moyens pour effectuer une vérification de la signature.

### Brève description des figures

La figure 1 présente un mode de réalisation d'un système selon l'invention.
Les figures 2 et 3 présentent un mode de réalisation d'un procédé qui n'est pas couvert par le texte des revendications, mais est considéré comme utile à la compréhension de l'invention.

### Description d'un mode de réalisation

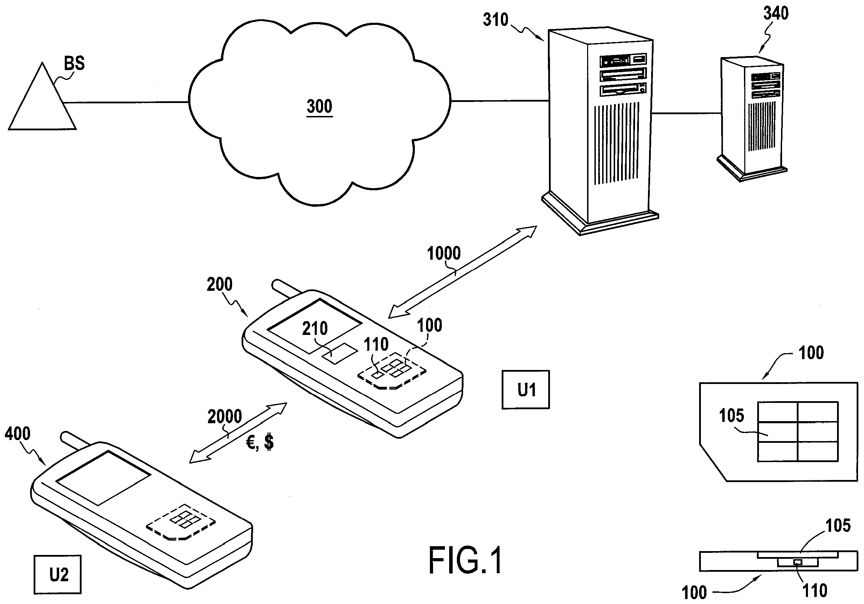

En **figure 1****,** on a présenté les dispositifs intervenant dans l'invention. Un commerçant (créditeur) U1 dispose d'un téléphone portable 200 comprenant une carte SIM (*Subscriber Identity Module* aussi appelée UICC, *Universal Integrated Circuit Card*) 100 qui a été remise au commerçant par exemple par l'opérateur de téléphonie mobile. La carte SIM 100 est représentée en agrandissement dans la partie inférieure droite de la figure 1, en vue de dessus et en vue de coupe, de côté. La carte SIM 100 a une interface de communication 105 à contacts lui permettant de communiquer avec le téléphone portable 200, par exemple de type SWP ou ISO7816, et elle embarque une application 110, communément appelée applet, qui est configurée par l'organisme d'acquisition de paiement et dans laquelle est notamment enregistré un numéro d'abonné à l'organisme d'acquisition de paiement. Cette application 110 permet la réalisation de la transaction. A la place d'une carte SIM, une carte microSD (micro *Secure Digital*) ou un module sécurisé embarqué communément appelé eSE peut être utilisé.

Le téléphone portable 200 est aussi équipé d'une application de paiement vendeur 210, communément appelée MIDLET (ce qui signifie conforme à la norme MIDP, ou « *Mobile Information Device Profile* »), lui permettant de communiquer avec un utilisateur (ici le commerçant U1) pour exécuter, en lien avec l'application 110 de la carte SIM 100 et un serveur distant (référencé 310, et qui sera présenté plus loin), différentes fonctions d'un terminal de point de vente.

Le commerçant entre en relation avec un acheteur (débiteur) U2 qui dispose d'un téléphone portable 400 ou plus généralement d'un moyen de paiement sans contact. Dans le cas où ce moyen de paiement est un téléphone portable 400, il est équipé d'une application de paiement acheteur (non représentée), qui a été fournie à l'acheteur préalablement par sa banque, ou, plus généralement, par un émetteur de moyens de paiement.

Le téléphone 200 est capable de se connecter à un réseau de téléphonie mobile 300, par l'intermédiaire d'une station de base BS. Les téléphones 200 et 400 sont capables de communiquer l'un avec l'autre directement par des moyens de communication sans fils à courte portée, par exemple de type NFC et répondant à la norme ISO 14443. L'interface de communication 105, qui est par exemple de type SWP, permet à l'entité électronique sécurisée de communiquer avec les moyens de communication sans fils à courte portée de type NFC du terminal.

Un serveur 310 est relié au réseau de téléphonie mobile 300. La carte SIM 100 et le serveur 310 sont configurés pour établir une connexion sécurisée entre eux, via une station de base du réseau de téléphonie mobile. Le serveur 310 est un serveur de vérification de transactions, géré par un organisme auprès duquel le commerçant dispose d'un numéro d'abonné.

Le serveur de vérification de transactions 310 peut entrer en communication avec un deuxième serveur 340, qui est relié au serveur de l'émetteur de moyen de paiement de l'acheteur U2.

Le serveur de vérification de transactions 310 communique de manière sécurisée avec la SIM 100.

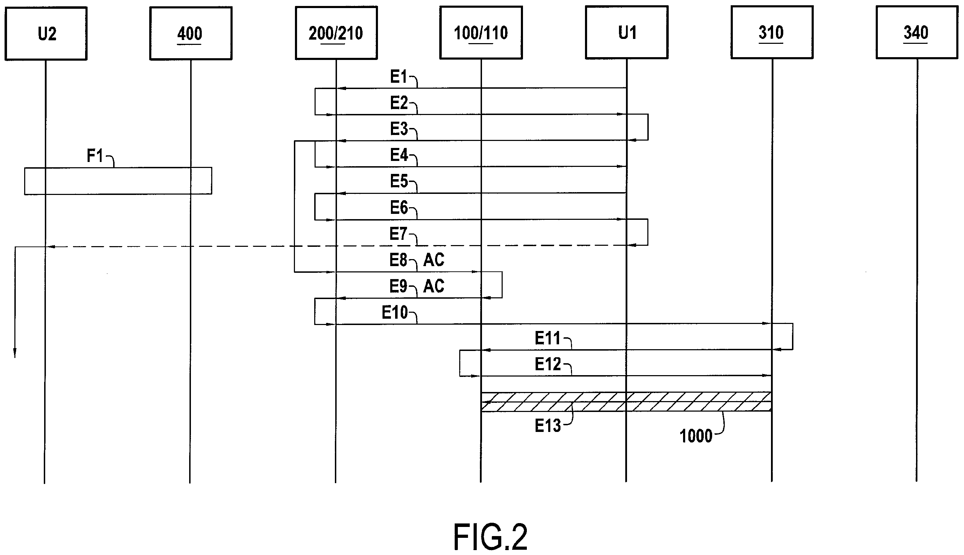

En **figure 2****,** on a présenté la première partie d'un procédé de paiement qui n'est pas couvert par le texte des revendications, mais est considéré comme utile à la compréhension de l'invention.

Le commerçant U1 effectue une étape E1 d'activation de l'application de paiement 210 de son téléphone 200.

L'application de paiement 210 se déclenche et affiche la date de la dernière transaction acceptée, qu'elle lit dans la carte SIM 100. Cet affichage permet au commerçant U1 de vérifier que l'application qu'il utilise est une application authentique, qui n'a pas été remplacée par une application pirate (malware ou autre) depuis la dernière transaction. Une autre information dynamique pourrait être utilisée.

L'application 210 de paiement 210 du téléphone 200 demande alors au commerçant U1 d'entrer son code PIN (*Personal Identification Number*), via une interface homme-machine, au cours d'une étape E2 de requête de code PIN. Le commerçant U1 compose alors son code PIN au cours d'une étape E3. D'autres méthodes d'identification du commerçant pourraient être utilisées, telle qu'une reconnaissance de données biométriques, par exemple. L'activation de l'application 210 peut aussi, dans une variante, utiliser la lecture d'une étiquette (tag) externe contenant des informations d'accréditation du commerçant U1.

L'application 210 de paiement du téléphone 200 demande ensuite, au cours d'une étape E4 et via son interface homme-machine, au commerçant U1 d'introduire le montant à débiter. Celui-ci donne cette information à l'application de paiement du téléphone 200 au cours d'une étape E5.

Au cours d'une étape E6, l'application de paiement 210 du téléphone 200 affiche un message d'invitation à destination de l'acheteur U2, lui demandant de positionner son moyen de paiement à proximité des moyens de communication à courte portée du téléphone 200. Au cours d'une étape E7, le commerçant U1 indique oralement à l'acheteur U2 de placer son moyen de paiement en face de son téléphone 200.

Parallèlement aux étapes E4 à E7, le code PIN du commerçant est transmis de l'application 210 du téléphone 200 à l'application 110 de la carte SIM 100, au cours d'une étape E8. L'application 110 est une application sécurisée qui a été introduite dans la carte SIM 100 en respectant les critères de sécurité relatifs à celle-ci. Elle dispose donc d'une forte intégrité. La communication entre l'application de paiement 210 du téléphone et l'application 110 de la carte SIM peut par exemple se faire avec le mécanisme d'Access Control pour authentifier l'application de paiement du téléphone vis-à-vis de la carte SIM (l'étape E8 est indiquée avec le symbole AC sur la figure 2 pour rappeler cette sécurisation).

L'application 110 vérifie à son tour le code PIN (Code confidentiel du commerçant), puis, à la demande de l'application 210, génère un élément d'authentification d'échange, spécifiquement choisi pour l'échange qu'elle va mener avec le serveur 310. Cet élément d'authentification d'échange est ici un nombre aléatoire ou tout autre type de donnée variable, choisi après vérification du code PIN par l'application applet ou au moment du démarrage de l'application applet.

L'application 110 de la carte SIM 100 crée alors un message comprenant à la fois le nombre aléatoire et le numéro spécifique au commerçant (numéro d'abonné), qui a été introduit dans la carte SIM 100, lors de la personnalisation de celle-ci. L'application 110 signe et crypte le message, en utilisant une clé de cryptographie asymétrique qui a également été introduite dans la carte SIM.

Le message crypté est transmis par l'applet 110 de la carte SIM 100 à l'application de paiement 210 du téléphone 200, au cours d'une étape E9 (sécurisé par le mécanisme *d'Access Control*). L'application de paiement 210 du téléphone est configurée pour envoyer ce message au serveur 310 au cours d'une étape E10, qui constitue une étape de requête d'authentification par le serveur 310 de la carte SIM 100. Cet envoi se fait par une technique de communication disponible dans le réseau 300, comme par exemple l'envoi d'un SMS, d'un message USSD (*Unstructured Supplementary Service Data*) ou d'une commande HTTP. L'envoi est adressé au serveur 310 à l'aide d'une adresse de ce serveur, par exemple un numéro de téléphone ou une adresse Internet, qui est enregistrée dans l'application de paiement du téléphone 200 ou dans la carte SIM 100.

Le serveur 310 analyse le contenu du message reçu, en le décryptant à l'aide de la clé correspondant à la clé précédemment utilisée par l'application 110. On précise que d'autres moyens de cryptographie pourraient être utilisés, à la place d'un couple de clés asymétriques.

Le serveur 310 vérifie la signature et le numéro de commerçant. Puis, si le numéro de commerçant correspond à la signature, il conclut que l'émetteur du message est bien l'application 110 de la carte SIM qui a été remise au commerçant U2. Le terminal 310 émet un message en retour à destination de l'application 110 de la carte SIM 100, par exemple sous la forme d'un SMS. Le terminal envoie, au cours d'une étape E11, un message PUSH normalisé, constituant une commande pour demander à l'application 110 de la carte SIM 100 d'ouvrir une connexion sécurisée pour communiquer avec lui. Ce message comprend le nombre aléatoire qui avait été généré par la carte SIM 100

L'application 110 de la carte SIM 100 reçoit le message PUSH, déchiffre et compare le nombre contenu dans celui-ci et le nombre aléatoire qu'elle a généré précédemment. S'ils sont identiques, l'application en conclut que l'émetteur du message PUSH est un serveur de confiance, authentique, géré par l'organisme de paiement.

L'application 110 de la carte SIM génère alors, à destination du serveur 310 une commande *Openchannel* par exemple, comme défini dans la norme ETSI TS 102223, demandant l'ouverture d'une connexion sécurisée, de type SMS, CAT-TP ou HTTP (cette dernière variante est définie dans le document Amendement B de la norme *Global Platform*). Le transfert de cette commande est effectué au cours de l'étape E12.

Par exemple un canal de communication sécurisé 1000 est alors créé entre l'application 110 de la carte 100 et le serveur 310 avec des commande UDP (*User Datagram Protocol,* pour un canal CAT-TP) ou TCP/IP (*Transmission Control Protocol*/ *Internet Protocol* pour un canal HTTP) transmises par le téléphone 200 (indépendamment de l'application de paiement) qui interagit avec la carte SIM par des commandes et des acquittements APDU (*application protocol data unit*), pour activer le système *Bearer Indépendant Protocol* (BIP).

Ou alors, dans une variante, des SMS sont échangés entre le serveur 310 et l'application 110, de manière transparente pour le téléphone 200.

Au cours d'une étape E13, les paramètres commerçants sont transmis par le serveur 310 à l'application 110 par la connexion sécurisée 1000. Les paramètres commerçants comprennent la liste AID (identifiants d'applications bancaires pour terminal de paiement), les devises, les plafonds et autres données permettant à l'application 110 de réaliser de manière autonome la transaction de paiement entre le commerçant U1 et l'acquéreur U2 au travers des téléphones 200 et 400 (ce qui inclut, dans le cadre d'une transaction EMV, les fonctions suivantes : sélection de l'application, *Get Processing Option, Read record* et *Generate AC*). L'avantage de l'étape E13 est de pouvoir utiliser le téléphone 200 comme une librairie EMV de niveau 2 avec les agréments correspondants. L'échange des paramètres commerçants entre le téléphone 200 et la carte SIM 100 se fait avec la sécurisation du mécanisme *d'Accès Control.*

Parallèlement aux étapes E1 à E13, l'acheteur U2 effectue une étape F1 d'activation de l'application de paiement acheteur du téléphone 400. Cette activation peut comprendre la composition d'un code personnel et le choix d'un environnement de paiement.

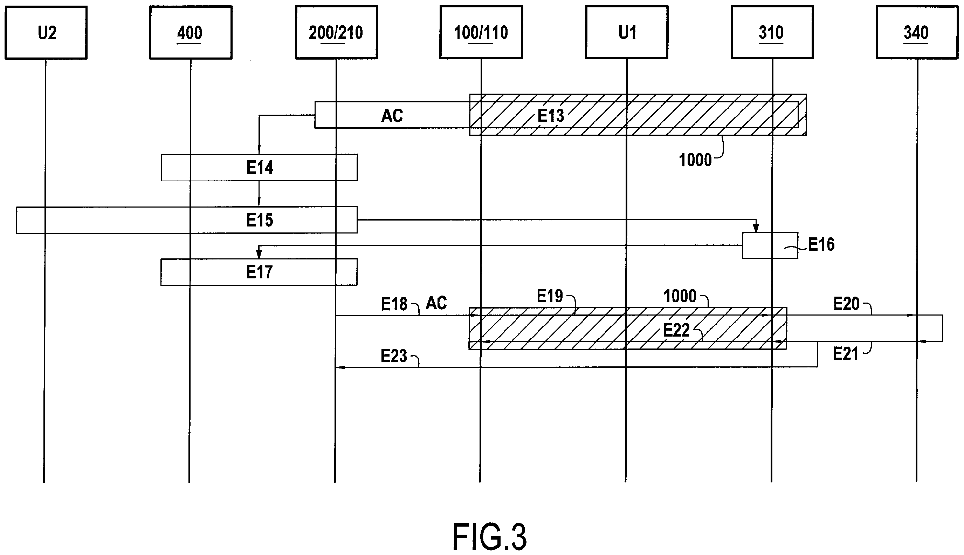

En **figure 3****,** on a représenté la suite du procédé selon l'invention. L'étape E13 de transmission des paramètres commerçant à la carte SIM et/ou à l'application de paiement du téléphone 200 est représentée à nouveau.

Elle est suivie d'une étape E14 de communication du téléphone 100 et du téléphone 200, par leurs interfaces NFC, pour permettre au téléphone 200 de sélectionner le même environnement de paiement que celui sélectionné sur le téléphone 100, pour traiter les options de traitement, et pour effectuer l'authentification des données d'application de paiement du téléphone 400 et vérifier le numéro de moyen de paiement (numéro PAN, *Primary Account Number*) et la date d'expiration associée, ces informations étant présentes dans la carte SIM du téléphone 400, et ayant été attribuées à l'acheteur U1 lors de son abonnement auprès de sa banque.

Une étape E15 d'identification de l'acheteur U2 par entrée de son code personnel est ensuite effectuée. D'autres méthodes d'identification pourraient être utilisées, notamment une reconnaissance biométrique. Mais pour une transaction d'un petit montant, l'identification de l'acheteur peut aussi être omise. Le code personnel est composé sur le clavier du téléphone 400, et vérifié à l'aide d'une communication entre les téléphones 400 et 200.

Il est ensuite procédé à une étape E16 de gestion du risque terminal (commerçant). Cette étape est effectuée entièrement sur le serveur 310. Elle peut comprendre l'examen de l'historique des transactions sur la journée, pour le commerçant U1. L'avantage de l'étape E16 est de déporter dans le serveur 310 les opérations de vérifications, par exemple *Card Holder vérification* et *Terminal Risk Management,* habituellement réalisées dans un terminal de paiement sans contact.

On procède ensuite à une étape E17 de génération d'un cryptogramme de transaction sur la base des données de transaction (montant date lieu) et des données bancaires (identifiant bancaire de l'utilisateur du téléphone 400). Ce cryptogramme est généré par la coopération de la carte SIM du téléphone 400 et de l'application de paiement du téléphone 200.

Pendant les étapes E14 à E17, l'application 110 de la carte SIM 100 reste inactive. Une étape E18 de transfert des données de transaction depuis l'application de paiement 210 du téléphone 200 vers l'application 110 de la carte SIM 100 est ensuite effectuée, avec la sécurité du mécanisme *d'Access Control.* Les données sont ensuite transmises, éventuellement signées et chiffrées, par la connexion sécurisée 1000, au serveur d'autorisation de paiement 310, au cours d'une étape E19. Ce transfert concerne le montant de la transaction, le numéro PAN, la date le lieu et le cryptogramme. Le serveur 310 vérifie les données de transaction et décide d'autoriser la transaction ou de la refuser. Il peut aussi estimer nécessaire de demander une autorisation à l'émetteur du moyen de paiement, et dans ce cas il contacte le serveur 340, au cours d'une étape E20, afin d'obtenir une telle autorisation, qu'il reçoit au cours d'une étape E21. Si la transaction est autorisée, une étape E22 est effectuée, au cours de laquelle le serveur 310 adresse sa réponse par la connexion sécurisée 1000 à la carte SIM 100. Un ticket est envoyé par le serveur 310, par SMS, à destination de la carte SIM 210, au cours d'une étape E23. Le ticket indique le résultat de la transaction.

L'invention n'est pas limitée aux modes de réalisation présentés, mais concerne toutes les variantes dans le cadre de la portée des revendications. Notamment, le réseau 300, au lieu d'être un réseau de téléphonie mobile, peut être un réseau étendu (par exemple Internet) auquel le téléphone 200 (ou une tablette tactile ou un autre dispositif électronique mobile) accède via une connexion Wi-Fi.

## Revendications

1. Système comprenant un serveur de vérification de transaction distant (310), un dispositif électronique portable (200), et une entité électronique sécurisée (100) comportant une interface de communication (105),
l'entité électronique sécurisée étant une entité électronique sécurisée du dispositif électronique portable (200) constituée par une carte SIM ou un module sécurisé embarqué (eSE),
le dispositif électronique portable (200) et le serveur distant (310) disposant de moyens de connexion à un réseau de télécommunications (300),
l'entité électronique sécurisée (100) comprenant une application (110) qui, quand l'entité électronique sécurisée est connectée par ladite interface de communication (105) au dispositif électronique portable (200), comporte :
- des moyens pour s'authentifier auprès dudit serveur distant (310),
- des moyens pour recevoir (E18), d'une application de paiement (210) dudit dispositif électronique portable (200) et via ladite interface de communication (105), des données relatives à une transaction envisagée (2000) avec un dispositif tiers (400), la communication entre l'application de paiement (210) et l'application (110) de l'entité sécurisée étant sécurisée à l'aide d'un mécanisme d'accès sécurisé de type Access Control (AC), et,
- des moyens pour transmettre (E19) lesdites données via une connexion sécurisée (1000) au serveur distant (310), pour qu'il les analyse en vue de prendre une décision quant à une éventuelle autorisation de la transaction,
**le système étant caractérisé en ce que** l'application (110) de l'entité électronique sécurisée (100) comprend en outre :
- des moyens pour authentifier ledit serveur de vérification de transaction (310) distant, et
- des moyens pour établir ladite connexion sécurisée (1000), via le réseau de télécommunications, entre ladite application (110) de l'entité électronique sécurisée (100) et ledit serveur distant (310), avec des commandes et des acquittements APDU échangés entre l'entité électronique sécurisée (100) et le dispositif électronique portable (200) pour activer le système BIP,
**et en ce que** le dispositif électronique portable (200) comprend également des moyens pour établir ladite connexion sécurisée (1000) avec des commandes UDP ou TCP/IP transmises à destination dudit serveur distant (310).

2. Système selon la revendication 1, dans lequel l'application (110) de l'entité électronique sécurisé, pour s'authentifier auprès dudit serveur distant, comprend des moyens pour transmettre (E9), via ladite interface de communication (105), un paramètre d'identification à un service de paiement,
encrypté avec une clé privée de l'entité électronique sécurisée (100).

3. Système selon la revendication 1 ou 2, dans lequel l'entité électronique sécurisée (100) est configurée pour que la connexion sécurisée (1000) soit une connexion de type SMS, CAT-TP ou HTTP.

4. Système selon l'une des revendications 1 à 3, dans lequel l'interface de communication (105) de l'entité électronique sécurisée (100) est adaptée pour une communication entre l'entité électronique sécurisée (100) et une interface de communication à courte portée du dispositif électronique portable (200).

5. Système selon l'une des revendications 1 à 4, dans lequel (100) comprend des moyens pour prendre en compte une information reçue du dispositif électronique portable (200) indiquant que l'entité électronique sécurisée (100) n'a pas pu être authentifiée par ledit serveur distant (310).

6. Système selon l'une des revendications 1 à 5, dans lequel l'entité électronique sécurisée (100) comporte de plus des moyens pour fournir, audit dispositif électronique portable (200), un élément mémorisé lors d'une précédente utilisation,
pour permettre à un utilisateur du dispositif électronique portable (200) de vérifier qu'il utilise une application du dispositif électronique portable qu'il a déjà utilisée auparavant.

7. Système selon l'une des revendications 1 à 6, dans lequel l'entité électronique sécurisée (100) comporte de plus des moyens pour vérifier l'identité d'un utilisateur du dispositif électronique portable.

8. Système selon l'une des revendications 1 à 7, dans lequel le serveur de vérification de transaction (310) comporte des moyens pour :
- s'authentifier auprès de l'entité électronique sécurisée (100),
- authentifier l'application (110) de ladite entité électronique sécurisée (100),
- établir une connexion sécurisée, via ledit réseau, entre ledit serveur (310) et l'application (110) de ladite entité électronique sécurisée (100),
- recevoir (E19), via la connexion sécurisée (1000), des données d'une transaction envisagée (2000), et,
- traiter ces données pour prendre une décision quant à une éventuelle autorisation de la transaction.

9. Système selon la revendication 8, dans lequel le serveur (310), pour authentifier l'entité électronique sécurisée (100), comprend :
- des moyens pour recevoir (E10), du dispositif électronique distant (200) et par ledit réseau, une signature cryptée, et
- des moyens pour effectuer une vérification de la signature.

## Patentansprüche

1. System, das einen entfernten Transaktionsverifizierungsserver (310), eine tragbare elektronische Vorrichtung (200) und eine sichere elektronische Entität (100) mit einer Kommunikationsschnittstelle (105) beinhaltet,
wobei die sichere elektronische Entität eine sichere elektronische Entität der tragbaren elektronischen Vorrichtung (200) ist, die aus einer SIM-Karte oder einem eingebetteten Sicherheitselement (eSE) besteht,
wobei die tragbare elektronische Vorrichtung (200) und der entfernte Server (310) über Mittel zum Verbinden mit einem Telekommunikationsnetz (300) verfügen,
wobei die sichere elektronische Entität (100) eine Anwendung (110) beinhaltet, die, wenn die sichere elektronische Entität über die Kommunikationsschnittstelle (105) mit der tragbaren elektronischen Vorrichtung (200) verbunden ist, Folgendes umfasst:
- Mittel, um sich gegenüber dem entfernten Server (310) zu authentifizieren,
- Mittel zum Empfangen (E18), von einer Zahlungsanwendung (210) der tragbaren elektronischen Vorrichtung (200) und über die Kommunikationsschnittstelle (105), von Daten bezüglich einer beabsichtigten Transaktion (2000) mit einer Drittvorrichtung (400), wobei die Kommunikation zwischen der Zahlungsanwendung (210) und der Anwendung (110) der sicheren Entität mit Hilfe eines sicheren Zugriffsmechanismus vom Typ Access Control (AC) gesichert wird, und
- Mittel zum Übertragen (E19) der Daten über eine sichere Verbindung (1000) an den entfernten Server (310), damit dieser sie im Hinblick auf das Treffen einer Entscheidung über eine mögliche Autorisierung der Transaktion analysiert,
**wobei das System dadurch gekennzeichnet ist, dass** die Anwendung (110) der sicheren elektronischen Entität (100) ferner Folgendes beinhaltet:
- Mittel zum Authentifizieren des entfernten Transaktionsverifizierungsservers (310) und
- Mittel zum Herstellen der sicheren Verbindung (1000) zwischen der Anwendung (110) der sicheren elektronischen Entität (100) und dem entfernten Server (310) über das Telekommunikationsnetz, wobei zwischen der sicheren elektronischen Entität (100) und der tragbaren elektronischen Vorrichtung (200) APDU-Befehle und -Quittierungen ausgetauscht werden, um das BIP-System zu aktivieren,
**und dass** die tragbare elektronische Vorrichtung (200) ebenfalls Mittel zum Herstellen der sicheren Verbindung (1000) beinhaltet, wobei UDP- oder TCP/IP-Befehle an den entfernten Server (310) übertragen werden.

2. System nach Anspruch 1, wobei die Anwendung (110) der sicheren elektronischen Entität, um sich gegenüber dem entfernten Server zu authentifizieren, Mittel zum Übertragen (E9), über die Kommunikationsschnittstelle (105), eines Identifikationsparameters an einen Zahlungsdienst beinhaltet,
der mit einem privaten Schlüssel der sicheren elektronischen Entität (100) verschlüsselt ist.

3. System nach Anspruch 1 oder 2, wobei die sichere elektronische Entität (100) so konfiguriert ist, dass die sichere Verbindung (1000) eine Verbindung vom Typ SMS, CAT-TP oder HTTP ist.

4. System nach einem der Ansprüche 1 bis 3, wobei die Kommunikationsschnittstelle (105) der sicheren elektronischen Entität (100) für eine Kommunikation zwischen der sicheren elektronischen Entität (100) und einer Nahbereichskommunikationsschnittstelle der tragbaren elektronischen Vorrichtung (200) angepasst ist.

5. System nach einem der Ansprüche 1 bis 4, wobei (100) Mittel zum Berücksichtigen einer von der tragbaren elektronischen Vorrichtung (200) empfangenen Information beinhaltet, die angibt, dass die sichere elektronische Entität (100) durch den entfernten Server (310) nicht authentifiziert werden konnte.

6. System nach einem der Ansprüche 1 bis 5, wobei die sichere elektronische Entität (100) ferner Mittel zum Bereitstellen, für die tragbare elektronische Vorrichtung (200), eines während einer vorhergehenden Verwendung gespeicherten Elements umfasst,
um es einem Benutzer der tragbaren elektronischen Vorrichtung (200) zu ermöglichen, zu verifizieren, dass er eine Anwendung der tragbaren elektronischen Vorrichtung verwendet, die er früher bereits verwendet hat.

7. System nach einem der Ansprüche 1 bis 6, wobei die sichere elektronische Entität (100) ferner Mittel zum Verifizieren der Identität eines Benutzers der tragbaren elektronischen Vorrichtung umfasst.

8. System nach einem der Ansprüche 1 bis 7, wobei der Transaktionsverifizierungsserver (310) Mittel umfasst, um
- sich gegenüber der sicheren elektronischen Entität (100) zu authentifizieren,
- die Anwendung (110) der sicheren elektronischen Entität (100) zu authentifizieren,
- eine sichere Verbindung zwischen dem Server (310) und der Anwendung (110) der sicheren elektronischen Entität (100) über das Netz herzustellen,
- über die sichere Verbindung (1000) Daten einer beabsichtigten Transaktion (2000) zu empfangen (E19) und
- diese Daten zu verarbeiten, um eine Entscheidung über eine mögliche Autorisierung der Transaktion zu treffen.

9. System nach Anspruch 8, wobei der Server (310) zum Authentifizieren der sicheren elektronischen Entität (100) Folgendes beinhaltet:
- Mittel zum Empfangen (E10), von der entfernten elektronischen Vorrichtung (200) und über das Netz, einer verschlüsselten Signatur und
- Mittel zum Durchführen einer Verifizierung der Signatur.

## Claims

1. System comprising a remote transaction verification server (310), a portable electronic device (200) and a secure electronic entity (100) comprising a communication interface (105),
the secure electronic entity being a secure electronic entity of the portable electronic device (200) that consists of a SIM card or an embedded secure module (eSE),
the portable electronic device (200) and the remote server (310) having means for connecting to a telecommunication network (300),
the secure electronic entity (100) comprising an application (110) that, when the secure electronic entity is connected by said communication interface (105) to the portable electronic device (200), comprises:
- means for authenticating itself to said remote server (310),
- means for receiving (E18), from a payment application (210) of said portable electronic device (200) and via said communication interface (105), data relating to an envisaged transaction (2000) with a third-party device (400), the communication between the payment application (210) and the application (110) of the secure entity being protected using a secure access mechanism of access control (AC) type, and
- means for transmitting (E19) said data via a secure connection (1000) to the remote server (310), in order for it to analyse them with the aim of taking a decision regarding possible authorization of the transaction,
the system being **characterized in that** the application (110) of the secure electronic entity (100) moreover comprises:
- means for authenticating said remote transaction verification server (310), and
- means for setting up said secure connection (1000), via the telecommunication network, between said application (110) of the secure electronic entity (100) and said remote server (310), using APDU commands and acknowledgements exchanged between the secure electronic entity (100) and the portable electronic device (200) in order to activate the BIP system,
and **in that** the portable electronic device (200) also comprises means for setting up said secure connection (1000) using UDP or TCP/IP commands transmitted to said remote server (310).

2. System according to Claim 1, wherein, in order to authenticate itself to said remote server, the application (110) of the secure electronic entity comprises means for transmitting (E9), via said communication interface (105), an identification parameter to a payment service, encrypted using a private key of the secure electronic entity (100).

3. System according to Claim 1 or 2, wherein the secure electronic entity (100) is configured so that the secure connection (1000) is a connection of SMS, CAT-TP or HTTP type.

4. System according to one of Claims 1 to 3, wherein the communication interface (105) of the secure electronic entity (100) is suitable for a communication between the secure electronic entity (100) and a short-range communication interface of the portable electronic device (200).

5. System according to one of Claims 1 to 4, wherein (100) comprises means for taking account of information received from the portable electronic device (200) indicating that the secure electronic entity (100) has not been able to be authenticated by said remote server (310) .

6. System according to one of Claims 1 to 5, wherein the secure electronic entity (100) furthermore comprises means for providing said portable electronic device (200) with an element stored during a previous use,
in order to allow a user of the portable electronic device (200) to check that they are using an application of the portable electronic device that they have already used before.

7. System according to one of Claims 1 to 6, wherein the secure electronic entity (100) furthermore comprises means for checking the identity of a user of the portable electronic device.

8. System according to one of Claims 1 to 7, wherein the transaction verification server (310) comprises means for:
- authenticating itself to the secure electronic entity (100),
- authenticating the application (110) of said secure electronic entity (100),
- setting up a secure connection, via said network, between said server (310) and the application (110) of said secure electronic entity (100),
- receiving (E19), via the secure connection (1000), data concerning an envisaged transaction (2000), and
- processing these data in order to take a decision regarding possible authorization of the transaction.

9. System according to Claim 8, wherein, in order to authenticate the secure electronic entity (100), the server (310) comprises:
- means for receiving (E10), from the remote electronic device (200) and via said network, an encrypted signature, and
- means for performing a check on the signature.
